# EUROPEAN PATENT APPLICATION

(11) **EP 0 485 985 A1**
(43) Date of publication of application: **20.05.1992**
(21) Application number: 91119351.4
(22) Date of filing: 13.11.1991
(51) Int. Cl.: C07F 7/18

(54) **Organosilicon compounds and methods of manufacturing thereof**

(30) Priority: 15.11.1990 JP 309977/90
(71) Applicant: SHIN-ETSU CHEMICAL CO., LTD., Chiyoda-ku Tokyo (JP)
(72) Inventor: Yamaya, Masaaki, Annaka-shi, Gunma-ken (JP); Yanagisawa, Hideyoshi, Usui-gun, Gunma-ken (JP); Yamazaki, Toshio, Annaka-shi, Gunma-ken (JP)
(74) Representative: Hansen, Bernd, Dr. Dipl.-Chem.

(57) **Abstract**

A novel organosilicon compound represented by the general formula: 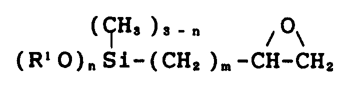
(wherein R¹ is a monovalent hydrocarbon group having 1 to 4 carbon atoms, m is an integer of 4 to 12, and n is an integer of 1 to 3), which is useful as addidtives for surface treating agents such as primer, bonding agents, and paint; and to the manufacture of composite materials such as laminated boards, FRP, FRTP, resin sealants, and the molding materials.

## Description

### BACKGROUND OF THE INVENTION

The present invention relates to a novel silane compound which is useful as surface treating agents or additives, and a method of manufacturing the same. More particularly, it relates to an alkoxysilane that has an alkyl group containing 4 to 12 carbon atoms in which the terminal hydrogen atom is replaced by an epoxy group and a method of manufacturing the same.

Various methods have been empolyed in the past for the synthesis of a wide variety of silane compounds that have an epoxy functional group. Examples that can be found in publications include a method of using a peracid to render the terminal unsaturated double bond of an olefinic functional silane into an epoxide (see Japanese Patent Kokoku Publication No. 35-6376); and a method of utilizing a hydrosilation reaction between a hydrosilane that contains a Si-H bond and an epoxy compound that has both an epoxy group and an unsaturated double bond (see Japanese Patent Kokoku Publication No. 38-16879 and Japanese Patent Laid-Open Publication No. 62-83342).

Among the synthetic silane compounds containing an epoxy functional group are silane compounds that are produced by a hydrosilation of allylglycidyl ether, vinyl cyclohexene epoxide, or terpene epoxide.

However, there has been no alkoxysilane containing a straight-chain alkyl group having four or more carbon atoms, in which the terminal hydrogen atom is replaced by an epoxy group.

### SUMMARY OF THE INVENTION

It is therefore an object of the present invention to provide an alkoxysilane containing a straight-chain alkyl group having four or more carbon atoms, in which the terminal hydrogen atom is replaced by an epoxy group, and to provide a method of manufacturing the same.

The inventors of present invention intensively studied methods of manufacturing the silane compounds described above, and have discovered that the novel silane compounds can be obtained in high yields by reacting, under the presence of a transition metal compound, a compound containing a straight-chain alkene having 4 to 12 carbon atoms, in which one terminal is a double bond and in which the hydrogen atom attached to the other terminal is replaced by an epoxy group with an alkoxysilane (in which the alkoxy group has 1 to 4 carbon atoms) containing a Si-H group. With this discovery, we were able to accomplish the present invention.

The organosilicon compound of the present invention comprises an organosilicon compound represented by the following general formula: 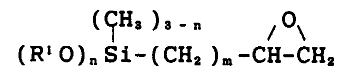
wherein R¹ is a monovalent hydrocarbon group having 1 to 4 carbon atoms, m is an integer of 4 to 12, and n is an integer of 1 to 3.)

The method of manufacturing of the present invention is a method of manufacturing an organosilicon compound represented by the following general formula: 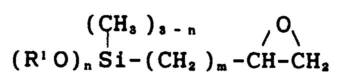
wherein R¹, m, and n have the same meanings as those defined above; comprising reacting, under the presence of a transition metal compound, an organosilicon compound A represented by the general formula: 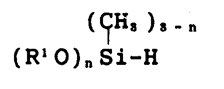
wherein R¹ is a monovalent hydrocarbon group having 1 to 4 carbon atoms, and n is an integer of 1 to 3 with an epoxy compound B represented by the general formula: 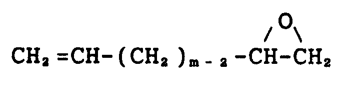
wherein m is an integer of 4 to 12.

### BRIEF DESCRIPTION OF THE DRAWINGS

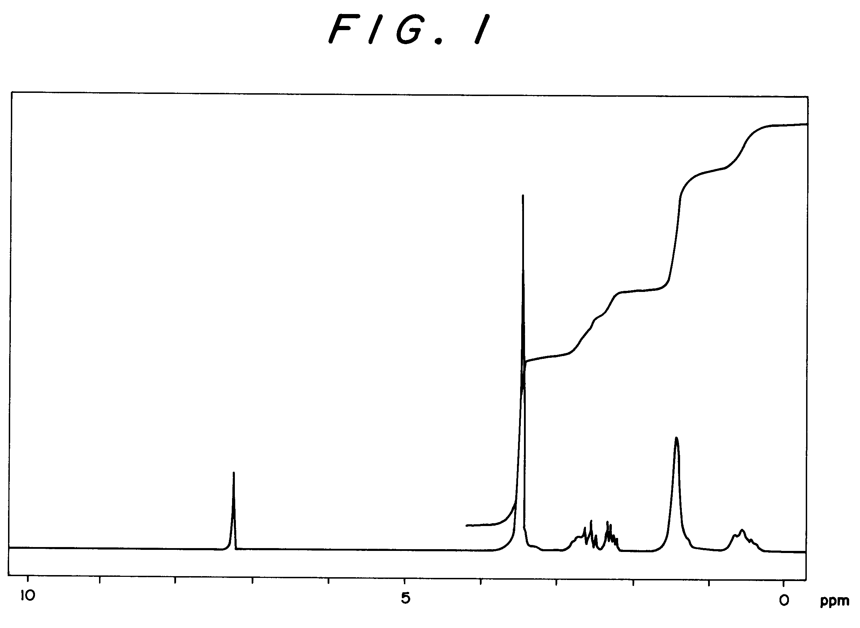

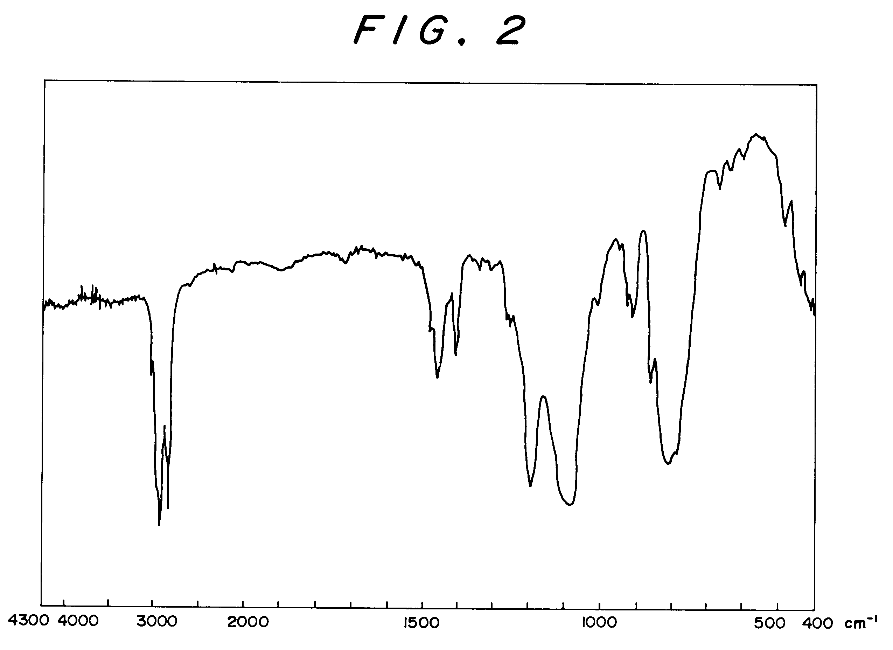

Figure 1 shows the ¹H-NMR spectra of the organosilicon compound obtained in Example 1 of the present invention. Figure 2 is the IR spectra of the same compound.

### DETAILED DESCRIPTION OF THE PREFERRED EMBODIMENTS

The organosilicon compound of the present invention can be represented by the following general formula, as noted in the above:

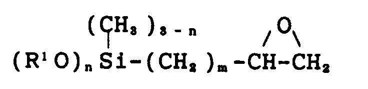

In the above formula, R¹ is a monovalent hydrocarbon group having 1 to 4 carbon atoms, and the specific examples of R¹ are listed below:

CH₃-, CH₃CH₂-, CH₃CH₂CH₂-, CH₃CH₂CH₂CH₂-,

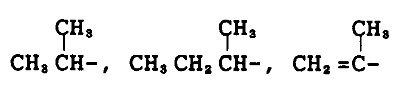

In the above formula, m is an integer of 4 to 12, and n is an integer of 1 to 3.

Specific examples of the organosilicon compound of the present invention are listed below:

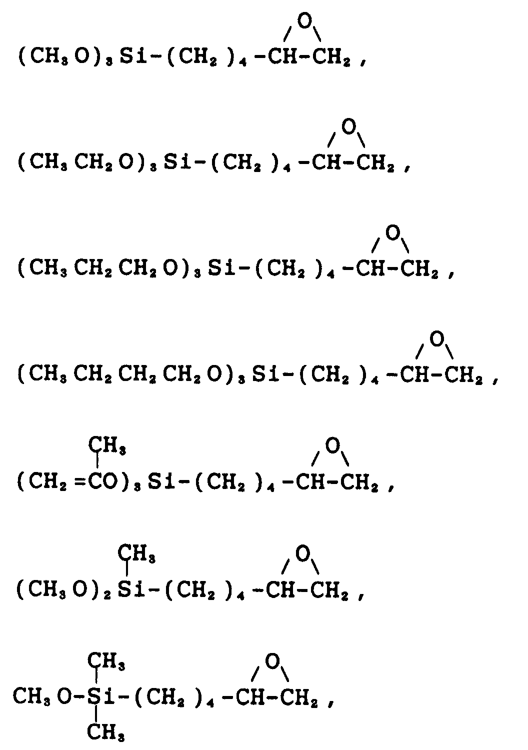

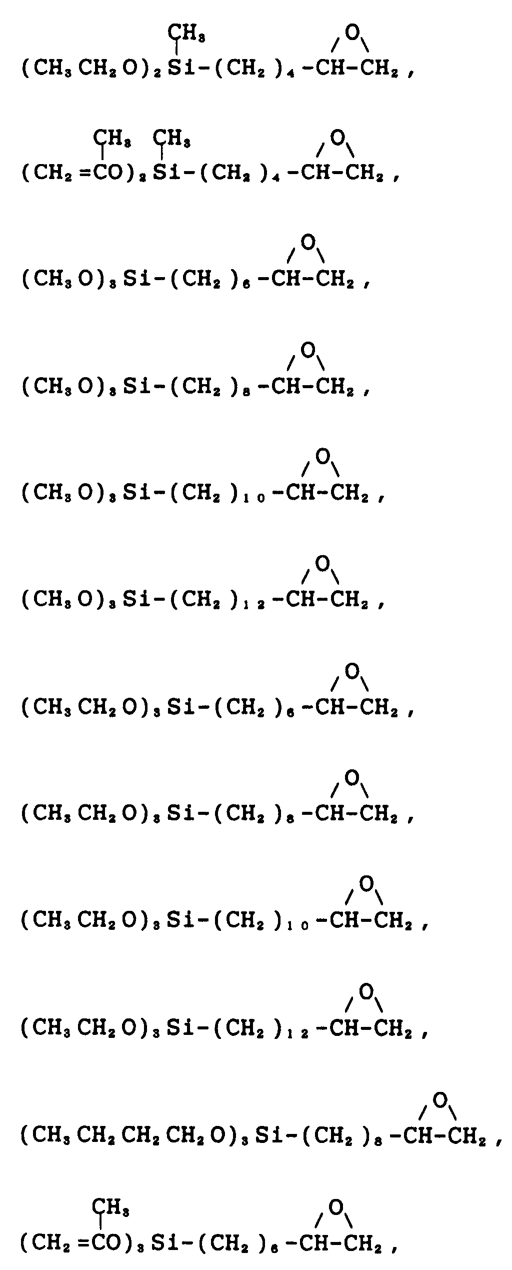

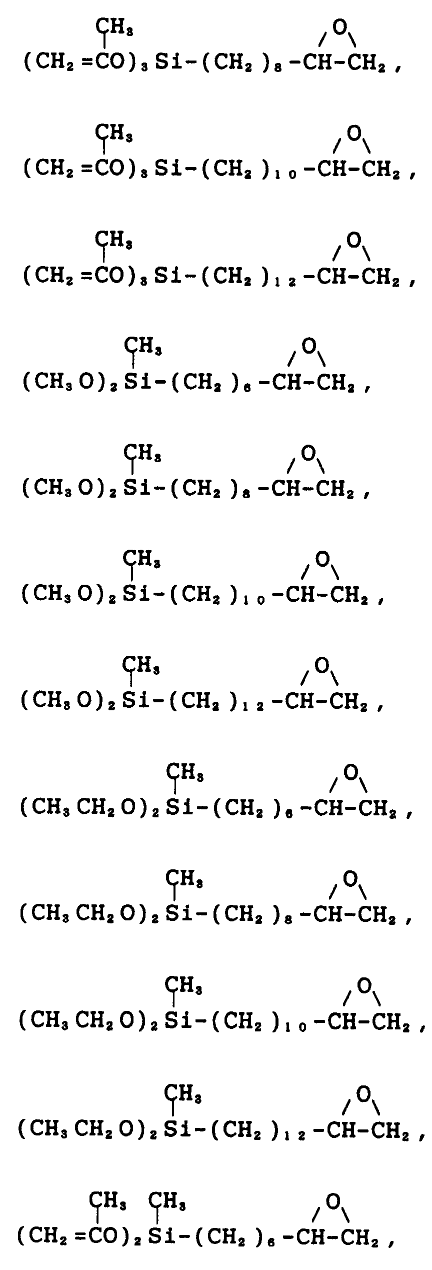

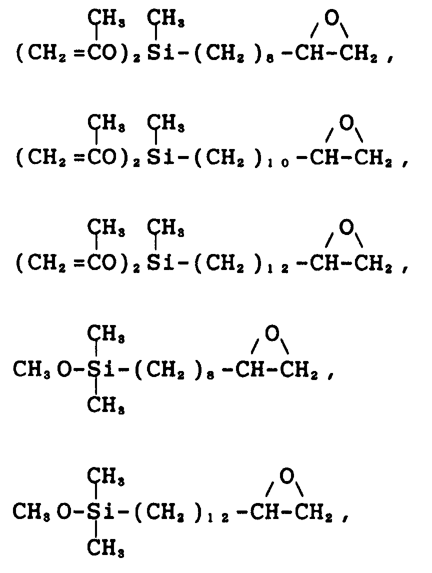

The above compounds of the present invention are manufactured by reacting, under the presence of a transition metal compound, an organosilicon compound A represented by the general formula: 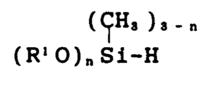
wherein R¹ and n are as defined above, with an epoxy compound B, containing a double bond at one of the terminal, represented by the general formula: 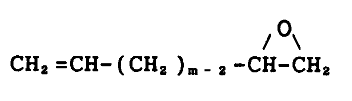
wherein m is as defined above.

Specific examples of the compound A include the following:

(CH₃O)₃Si-H, (CH₃CH₂O)₃Si-H, (CH₃CH₂CH₂O)₃Si-H,

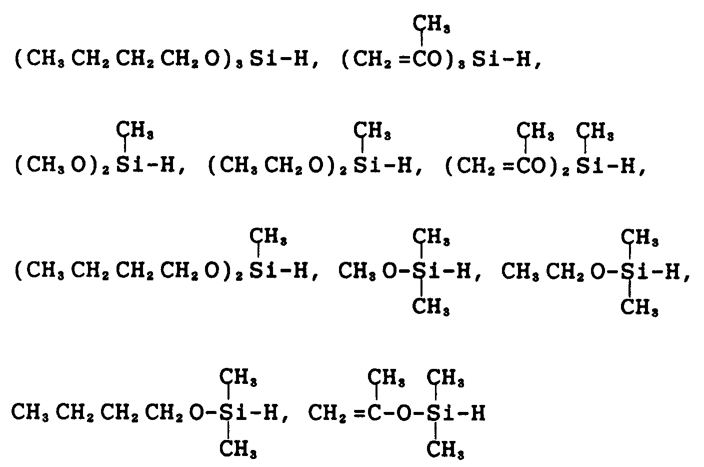

The compound B can be obtained by mono-epoxidation of a double-terminal diolefin, carried out through the use of peracetic acid or hydrogen peroxide etc. The double-terminal diolefin can be obtained by a metathesis reaction of an olefin through the use of a transition metal catalyst, such as one containing tungsten or ruthenium.

Specific examples of the compound B are listed below:

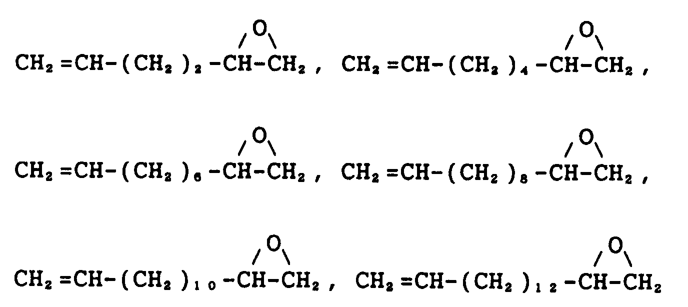

The transition metal compound used in the present invention is a reaction catalyst, and any of the known hydrosilation catalysts can be used. Preferable ones are compounds containing platinum, rhodium, ruthenium, or cobalt. These transition metal compounds can be used in the solid state, or they can be dissolved in a solvent, such as alcohols, aromatic compounds, or halogenated hydrocarbons.

Preferably, the following reaction conditions should be employed: mole ratio (the compound A / the compound B): in the range of 0.1 - 5.0; temperature: in the range of 30 - 150 °C ; and reaction time: in the range of 0.5 - 20 hour. In these reaction conditions, a mole ratio of less than 0.1 or greater than 5.0 leads to a substantial decrease in pot yield and a cost increase of the final product. The more preferable range of the mole ratio is 0.3 to 3.0.

Any of the following solvents can be used for the reaction: an aromatic solvent, such as toluene and xylene; an ether solvent, such as dioxane, THF, and dibutyl ether; and an ester solvent, such as ethylacetate and butylacetate.

A useful protocol for carrying out the reaction involves placing the compound A and a transition metal compound in a reaction vessel, and allowing the compound B to drip onto it. Conversely, it is also possible to place the compound B and a transition metal compound in a reaction vessel, and allow the compound A to drip onto it.

The organosilicon compound of the present invention exhibits unique properties due to the high value of m in the above general formula, and they are suitable for applications including additives for surface treating agents such as primer, bonding agents, and paints; and for the manufacture of composite materials such as laminated boards, FRP, FRTP, resin sealants, and molding materials.

The present invention will now be described in more detail, with reference to the following examples.

### Example 1

98g of 5,6-epoxy-1-hexene (1.0 mole) and 0.52g (1.0 x 10⁻⁵ moles) of butanol solution containing 1% chloroplatinic acid were placed in a 1-L flask, under nitrogen gas, equipped with a Dimroth condenser, a thermometer, a dropping funnel, and a nitrogen gas inlet tube. After the temperature of the mixture was raised to 60°C , 116g (0.95 mole) of trimethoxysilane were allowed to slowly drip onto the mixture. After the temperature was maintained at 60°C for three hours, the mixture was distilled under a 2-Torr condition at a 100 °C boiling point. The result was 169g of a clear, colorless liquid. Subsequent ¹H-NMR, IR, and elemental analyses confirmed that the liquid has the following structural formula:

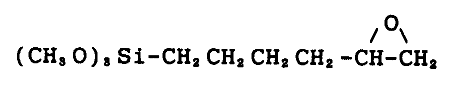

The yield of the product was 77%. Its purity, as determined by gas chromatography, was 98.7%. Further, the product exhibited the following physical properties: viscosity, 2.36 cs; specific gravity, 1.024; and refractive index, 1.4243.

### ¹H-NMR analysis (Figure 1; internal standard: benzene) Chemical shift (δ ):

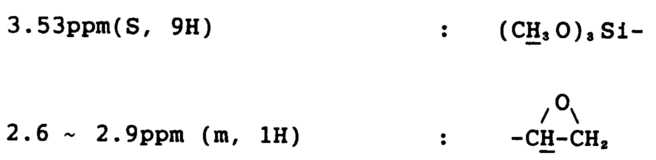

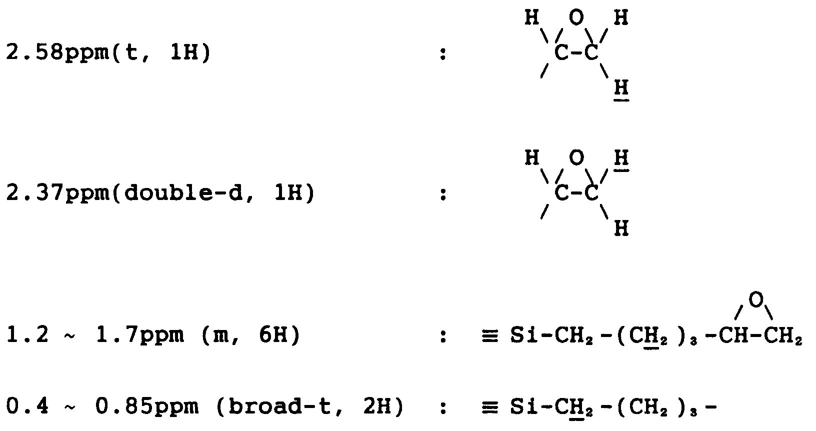

### IR analysis (Figure 2):

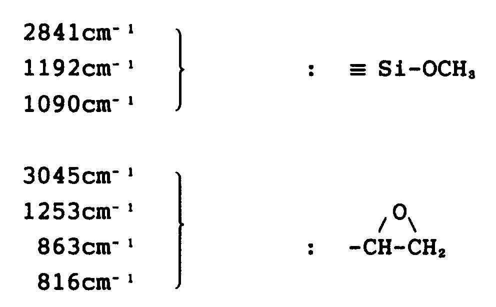

### Elemental analysis:

| | Theoretical value (%) | Observed value (%) |
|---|---|---|
| C | 48.62 | 48.45 |
| H | 9.07 | 9.24 |
| Si | 12.63 | 12.51 |

### Example 2

A reaction was carried out under the same conditions as those described in Example 1, except that 154g (1.0 mole) of 9,10-epoxy-1-decene was used in lieu of 5,6-epoxy-1-hexene. A distillation performed under conditions of 132 °C boiling point and 2 Torr after the reaction period yielded 138g of a reaction product. Subsequent ¹H-NMR, IR, and elemental analyses confirmed that the product has the following structural formula:

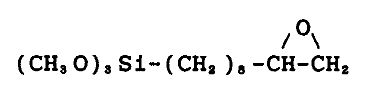

The yield of the product was 50%. Its purity, as determined by gas chromatography, was 98.0%. Further, the product exhibited the following physical properties: viscosity, 4.56 cs; specific gravity, 0.978; and refractive index, 1.4336.

### ¹H-NMR analysis Chemical shift (δ ):

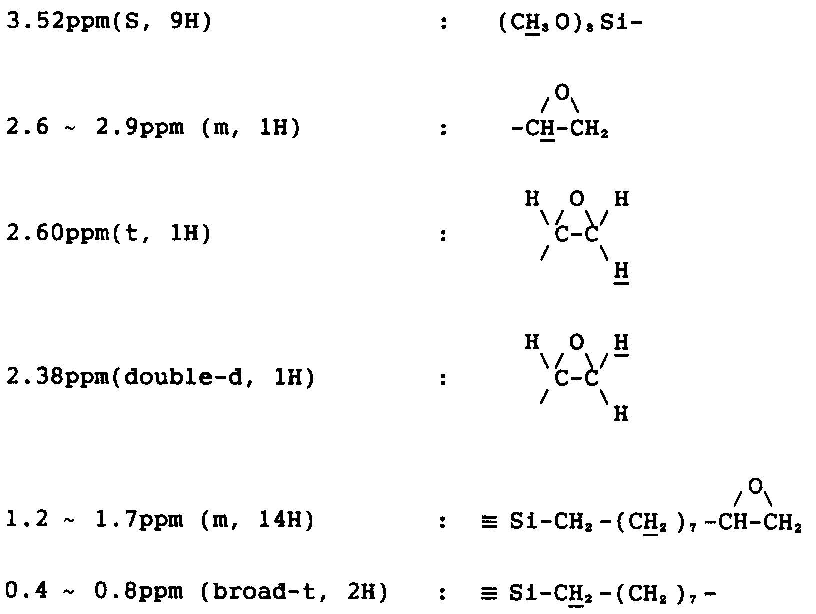

### IR analysis (Figure 2):

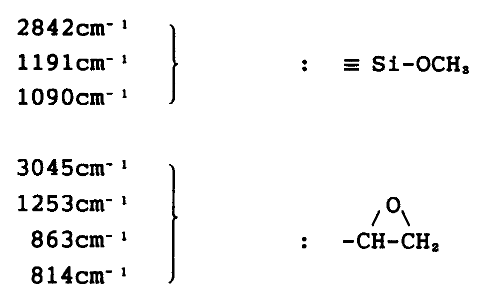

### Elemental analysis:

| | Theoretical value (%) | Observed value (%) |
|---|---|---|
| C | 56.08 | 55.82 |
| H | 10.14 | 10.33 |
| Si | 10.09 | 10.01 |

### Example 3

A reaction was carried out under the same conditions as those described in Example 1, except that 127.3g (0.95 mole) of methyldiethoxy silane were used in lieu of trimethoxysilane. A distillation performed under conditions of 78°C boiling point and 2 Torr after the reaction period yielded 174g of a reaction product. Subsequent ¹H-NMR, IR, and elemental analyses confirmed that the product has the following structural formula:

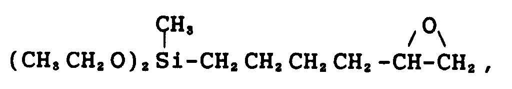

The yield of the product was 75%. Its purity, as determined by gas chromatography, was 98.3%.

### ¹H-NMR analysis Chemical shift (δ ):

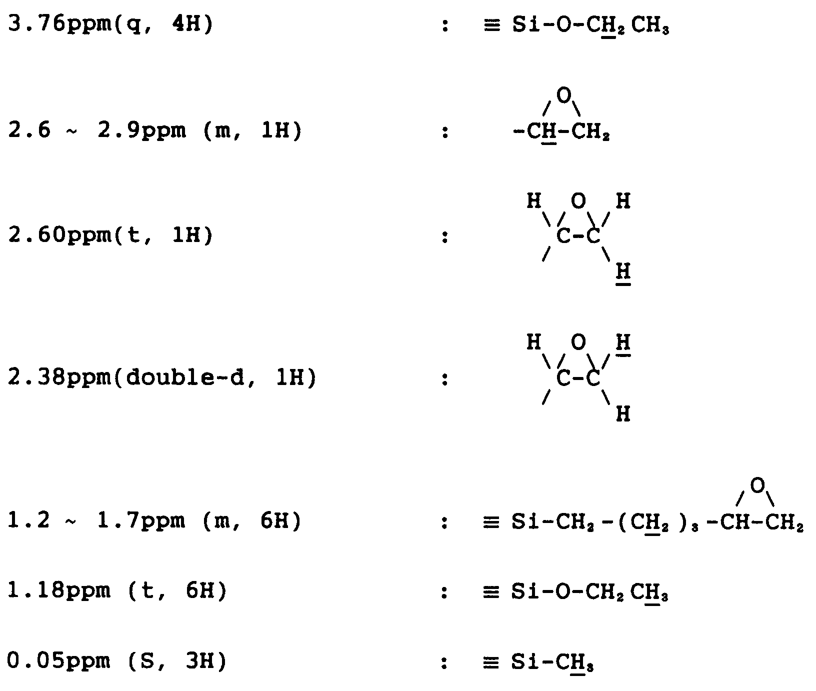

### IR analysis

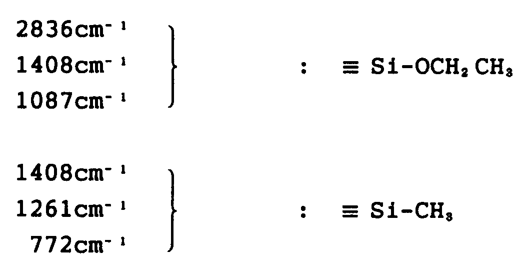

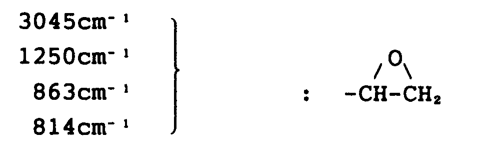

### Elemental analysis:

| | Theoretical value (%) | Observed value (%) |
|---|---|---|
| C | 56.85 | 56.74 |
| H | 10.41 | 10.58 |
| Si | 12.09 | 12.00 |

## Claims

1. An organosilicon compound represented by the following general formula: 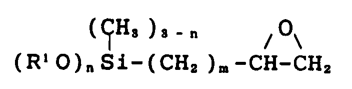 wherein R¹ is a monovalent hydrocarbon group having 1 to 4 carbon atoms, m is an integer of 4 to 12, and n is an integer of 1 to 3.

2. The organosilicon compound of claim 1, wherein the R¹ is methyl group.

3. The organosilicon compound of claim 1, wherein the R¹ is ethyl group.

4. The organosilicon compound of claim 2 or 3, wherein m is 4; and n is 3.

5. The organosilicon compound of claim 2 or 3, wherein m is 8; and n is 3.

6. A method of manufacturing an organosilicon compound represented by the following general formula: 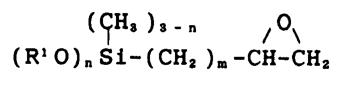 wherein R¹ is a monovalent hydrocarbon group having 1 to 4 carbon atoms, m is an integer of 4 to 12, and n is an integer of 1 to 3, which comprising reacting, under the presence of a transition metal compound, an organosilicon compound A represented by the general formula: 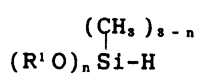 wherein R¹ is a monovalent hydrocarbon group having 1 to 4 carbon atoms, and n is an integer of 1 to 3 with an epoxy compound B represented by the general formula: 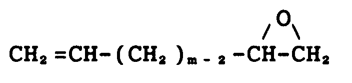 wherein m is an integer of 4 to 12.

7. The method of claim 6, wherein the mole ratio between the organosilicon compound A and the epoxy compound B to be reacted is in the range of 0.1 to 5.0.

8. The method of claim 6, wherein the mole ratio between the organosilicon compound A and the epoxy compound B to be reacted is in the range of 0.3 to 3.0.

9. The method of claim 6, wherein the organosilicon compound A is trimethoxysilane or methyldiethoxysilane.

10. The method of claim 6, wherein the organosilicon compound B is 5,6-epoxy-1-hexene or 9,10-epoxy-1-decene.
